Europäisches Patentamt

European Patent Office

Office européen des brevets

(11) Numéro de publication : **0 114 139**
**B1**

(12) **FASCICULE DE BREVET EUROPÉEN**

(45) Date de publication du fascicule du brevet :
28.09.88

(51) Int. Cl.⁴ : **G 01 N 27/90**

(21) Numéro de dépôt : **84400074.5**

(22) Date de dépôt : **13.01.84**

(54) **Dispositif de contrôle de tubes cintrés à sonde propulsée pneumatiquement.**

(30) Priorité : **18.01.83 FR 8300692**

(43) Date de publication de la demande :
**25.07.84 Bulletin 84/30**

(45) Mention de la délivrance du brevet :
**28.09.88 Bulletin 88/39**

(84) Etats contractants désignés :
**BE DE FR GB IT NL**

(56) Documents cités :
**DE-A- 2 702 280**
**GB-A- 1 453 189**
**US-A- 3 075 292**
**US-A- 4 194 149**
**US-A- 4 262 539**

(73) Titulaire : **COMMISSARIAT A L'ENERGIE ATOMIQUE**
**31/33, rue de la Fédération**
**F-75015 Paris (FR)**

(72) Inventeur : **David, Bernard**
**3, Résidence du Château de Courcelles**
**F-91190 Gif sur Yvette (FR)**
Inventeur : **Pigeon, Michel**
**14, Avenue du Maréchal Foch**
**F-91440 Bures sur Yvette (FR)**
Inventeur : **Vienot, Claude**
**16, rue Gaston Charle**
**F-94120 Fontenay-sous-Bois (FR)**

(74) Mandataire : **Mongrédien, André et al**
**c/o BREVATOME 25, rue de Ponthieu**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un dispositif de contrôle de tubes cintrés et plus particulièrement hélicoïdaux, notamment des tubes métalliques servant à assurer l'échange de chaleur dans les appareils tels que les générateurs de vapeur et les condenseurs...

De façon plus précise, l'invention concerne un dispositif de contrôle de tubes cintrés permettant de propulser pneumatiquement une sonde telle qu'une sonde à courants de Foucault à l'intérieur des tubes, afin de contrôler l'état de ces derniers. La détection et la localisation des défauts constituent en effet des opérations de contrôle essentielles des appareils d'échange de chaleur, notamment lorsque les deux fluides risquent de réagir l'un sur l'autre comme c'est le cas dans les générateurs de vapeur équipant les réacteurs nucléaires à métal liquide, dans lesquels les deux fluides sont respectivement du sodium et de l'eau. Les défauts susceptibles de conduire à la rupture d'un tube doivent alors être détectés dès que possible afin d'éviter leur agravation et les conséquences très graves qui pourraient en résulter aussi bien pour l'appareil que pour son environnement.

Dans cet esprit, on connait déjà un certain nombre de dispositifs de contrôle de tubes parmi lesquels on citera notamment le dispositif décrit dans l'article « Research and Development of the Method of Inserting Probe into Helically Coiled Tubes in Steam Generator for In-Service Inspection (ISI) » paru dans la revue IHI Engineering Review, vol.13, n° 1, qui permet d'introduire pneumatiquement une sonde dans un tube en fixant la sonde à un câble muni de flotteurs, l'introduction du câble dans le tube étant facilitée par un mécanisme de guidage approprié, assurant simultanément l'étanchéité vis-à-vis de l'extérieur du système pneumatique de propulsion (voir aussi GB-A-1 453 189).

D'autre part, on connait de la demande de brevet français n° 75 24698 du 7 août 1975 au nom du Commissariat à l'Energie Atomique une sonde à courants de Foucault reliée par un câble équipé de moyens de guidage appropriés tels que des flotteurs, au dispositif permettant de l'introduire dans le tube et de l'extraire hors de celui-ci.

Ces dispositifs connus permettent d'introduire la sonde dans un tube cintré présentant des coudes de petit rayon et des bourrelets de soudure. Toutefois, ils ne permettent pas de résoudre de façon totalement satisfaisante le problème posé par l'introduction pneumatique de la sonde qui conduit à une vitesse de défilement de celle-ci trop importante et très irrégulière, notamment lorsqu'on contrôle un tube de grande longueur (par exemple environ 100 m). Il est donc nécessaire de réduire la vitesse de défilement de la sonde et de régulariser cette vitesse afin qu'elle reste pratiquement constante d'une extrémité à l'autre du tube à contrôler.

L'introduction pneumatique des sondes selon la technique antérieure a également pour inconvénient de provoquer des à-coups et des vibrations conduisant fréquemment à la rupture du câble auquel est fixée la sonde. Compte tenu de la structure des sondes et des câbles selon la technique antérieure, il est alors très difficile de faire ressortir la sonde du tube. En plus de la régularisation du défilement de la sonde tendant à réduire les risques de rupture du câble, la présente invention a également pour objet de réaliser une sonde et un câble dont la structure soit telle qu'elle permette de récupérer la sonde même en cas de rupture partielle.

Ainsi, il est proposé conformément à l'invention un dispositif de contrôle de tubes cintrés et plus particulièrement hélicoïdaux à sonde propulsée pneumatiquement, comprenant une enceinte étanche apte à être mise en communication avec un tube à contrôler, des moyens pour introduire un fluide sous pression à l'intérieur de l'enceinte et pour évacuer ce fluide hors de l'enceinte, une sonde comportant un câble muni de flotteurs et une tête de contrôle fixée à l'extrémité du câble, et des moyens d'enroulement du câble, caractérisé en ce qu'il comprend de plus des moyens de régulation de la vitesse d'introduction de la sonde, disposés à l'intérieur de l'enceinte étanche et comprenant un dispositif de freinage à vitesse constante et régulée, solidarisé en rotation de l'arbre d'une poulie munie d'une gorge dans laquelle passe le câble, et des moyens pour appliquer le câble sur la poulie quelle que soit la section du câble, ces derniers moyens comprenant une courroie tendue en permanence par des moyens élastiques et apte à se déformer selon la section du câble.

Selon un premier mode de réalisation de l'invention, le dispositif de freinage comprend un moteur à vitesse régulée électroniquement.

Selon un deuxième mode de réalisation de l'invention, le dispositif de freinage comprend un frein électromagnétique dont le couple de freinage est régulé électroniquement.

Selon un mode de réalisation préféré de l'invention, des moyens sont prévus pour transmettre à la courroie la rotation de la poulie, de façon à faire avancer la courroie à la même vitesse que la gorge de la poulie.

Afin d'assurer en permanence la tension du câble entre sa bobine d'enroulement et les moyens de régulation de la vitesse d'introduction les moyens d'enroulement du câble comprennent de préférence une bobine montée sur l'arbre d'un moteur couple.

De façon à éviter le coincement de la sonde dans le tube au début de son introduction, les flotteurs peuvent être espacés les uns des autres selon au moins deux pas différents le long du câble, le pas séparant les flotteurs les plus proches de la tête de contrôle étant inférieur et, par exemple, moitié de celui qui sépare les autres flotteurs.

Pour permettre de récupérer la sonde même en cas de rupture comme on l'a mentionné précédemment, la sonde comporte sur toute sa longueur un câble central de traction qui traverse la tête de contrôle et est fixé à l'extrémité avant de cette dernière. Cette fixation peut notamment se faire au moyen d'un noeud enrobé d'un matériau de collage, ce qui permet d'éviter la rayure des surfaces internes du tube par les brins du câble central.

Parallèlement, et afin d'accroître la résistance à la rupture de la liaison entre le câble et la tête de contrôle, cette liaison peut être effectuée au moyen d'un ressort dans lequel sont réalisées des connexions électriques entre des conducteurs électriques coaxiaux du câble et des bobinages de la tête de contrôle, ce ressort étant rempli d'un matériau de remplissage tel qu'une résine souple.

On décrira maintenant, à titre d'exemple non limitatif, deux modes de réalisation de l'invention en se référant aux dessins annexés dans lesquels :

- la figure 1 est une vue en coupe schématique du dispositif de contrôle selon l'invention,

- la figure 2 est une vue en coupe à plus grande échelle du dispositif permettant de réguler la vitesse d'introduction de la sonde dans le tube,

- la figure 3 est une vue en coupe longitudinale à grande échelle de l'extrémité de la sonde montrant la tête de contrôle et sa fixation à l'extrémité du câble, et

- la figure 4 est une vue de côté et en coupe illustrant un deuxième mode de réalisation de l'invention selon lequel la régulation de la vitesse d'introduction de la sonde est obtenue au moyen d'un frein électromagnétique solidarisé en rotation de l'arbre de la poulie sur laquelle passe le câble.

Le dispositif selon l'invention est particulièrement adapté au contrôle, au moyen d'une sonde à courants de Foucault, de tubes cintrés de grande longueur tels que les tubes enroulés en hélice d'un générateur de vapeur équipant un réacteur nucléaire refroidi par un métal liquide. Toutefois, on comprendra que ce dispositif pourrait aussi être utilisé pour contrôler des tubes de toute autre nature au moyen d'une sonde fonctionnant selon un principe différent.

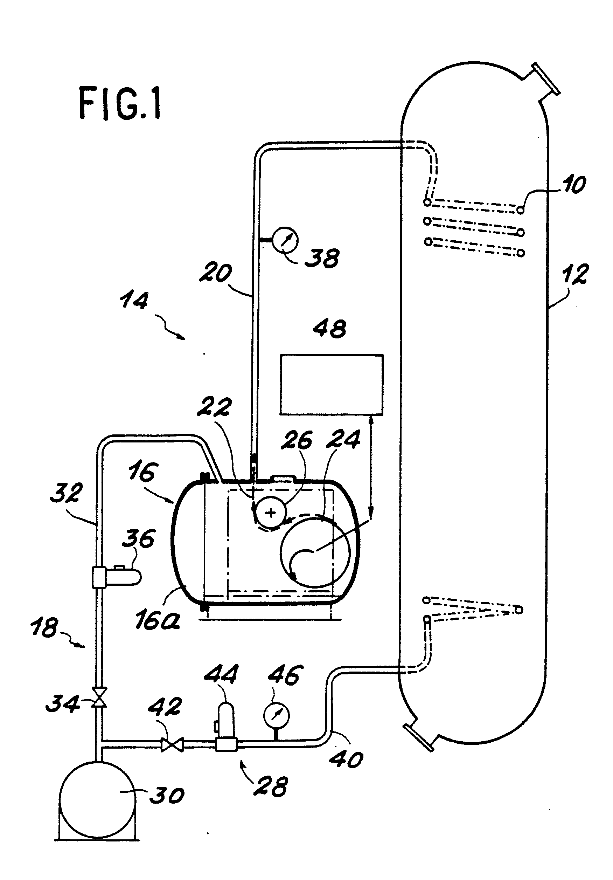

Afin d'illustrer l'application préférée de l'invention au contrôle des tubes d'un générateur de vapeur, on a représenté de façon schématique sur la figure 1 l'un des tubes 10 enroulés en hélice d'un générateur de vapeur 12.

Les générateurs de vapeur, qui équipent notamment les réacteurs nucléaires à neutrons rapides, sont bien connus des spécialistes, de sorte que le générateur de vapeur 12 ne sera pas décrit ici en détail. Pour la compréhension de l'invention, il est suffisant de savoir que chacun des tubes 10 traverse l'enveloppe verticale du générateur et débouche à l'extrémité inférieure et à l'extrémité supérieure de celui-ci dans des collecteurs d'entrée et de sortie (non représentés), par exemple de forme torique. La structure de ces collecteurs où des parties de tubes situées entre ces collecteurs et l'enveloppe de l'échangeur est telle qu'il est possible d'avoir accès à chacun des tubes pour y introduire une sonde à l'aide d'un dispositif de contrôle tel que le dispositif 14 selon la présente invention.

Comme l'illustre schématiquement la figure 1, ce dispositif de contrôle 14 comprend principalement une enceinte étanche 16, des moyens 18 pour introduire un fluide sous pression tel que de l'air comprimé dans l'enceinte 16, un tube souple 20 permettant de faire communiquer de façon étanche l'enceinte 16 et le tube 10 à contrôler, une sonde 22 comprenant comme on le verra ultérieurement une tête de contrôle et un câble de liaison 23, un enrouleur 24 et des moyens 26 pour réguler la vitesse d'introduction de la sonde dans le tube à contrôler, l'enrouleur 24 et les moyens 26 étant disposés à l'intérieur de l'enceinte étanche 16, et des moyens 28 pour appliquer une contre-pression à l'autre extrémité du tube 10 à contrôler, afin de ramener la sonde à l'intérieur de l'enceinte 16 lorsque le contrôle est terminé.

De préférence, afin d'assurer la maintenance des différents mécanismes se trouvant à l'intérieur de l'enceinte 16, celle-ci est munie d'une porte 16a pourvue d'un mécanisme de fermeture parfaitement étanche.

L'air comprimé servant à la fois à introduire la sonde dans le tube à contrôler et à faire ressortir la sonde du tube est produit à l'aide d'un compresseur 30. Ce compresseur 30 communique avec l'enceinte 16 par une tuyauterie 32 équipée d'une vanne 34 et d'une soupape de décharge 36. Ces différents éléments constituent les moyens 18 pour introduire de l'air comprimé dans l'enceinte étanche 16 et assurer ainsi l'introduction pneumatique de la sonde 22 dans le tube 10 à contrôler, lorsque le tube de raccordement 20 est connecté de façon étanche à l'extrémité supérieure de ce tube 10, en considérant la figure 1. De préférence, la pression d'introduction de la sonde ainsi établie à l'entrée du tube 10 est contrôlée au moyen d'un manomètre 38 branché sur le tube de raccordement 20.

De façon comparable, les moyens 28 permettant de faire ressortir la sonde du tube 10 comprennent une canalisation 40 qui fait communiquer de façon étanche le compresseur 30 avec l'extrémité inférieure de ce tube 10, cette canalisation 40 étant équipée d'une vanne 42 et d'une soupape de décharge 44. De préférence, la canalisation 40 comporte une partie souple qui lui permet d'être raccordée sans difficulté à l'extrémité inférieure du tube 10. En outre, un manomètre 46 est également prévu dans la canalisation 40 afin de contrôler la pression régnant dans celle-ci, notamment lors du retour de la sonde vers l'enceinte 16.

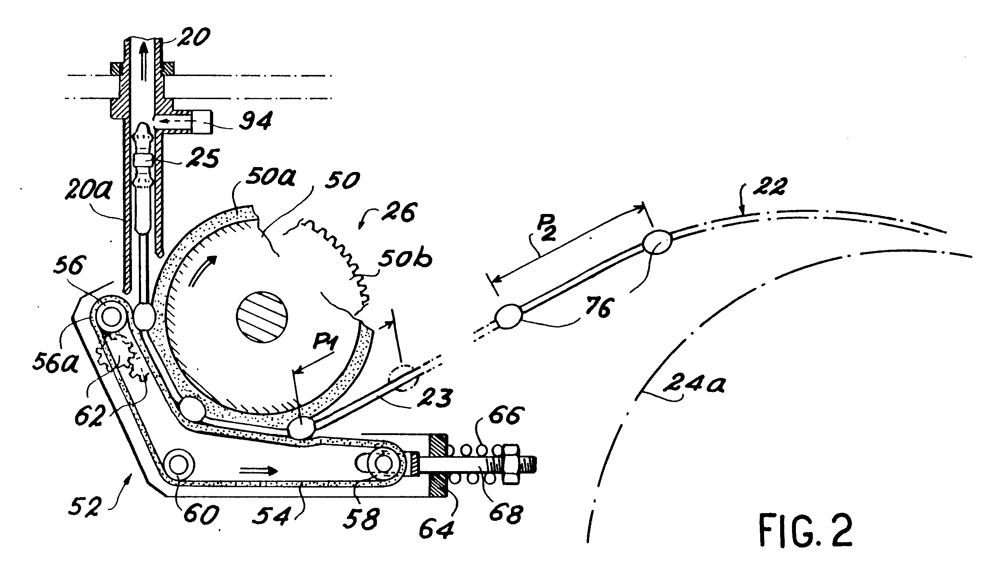

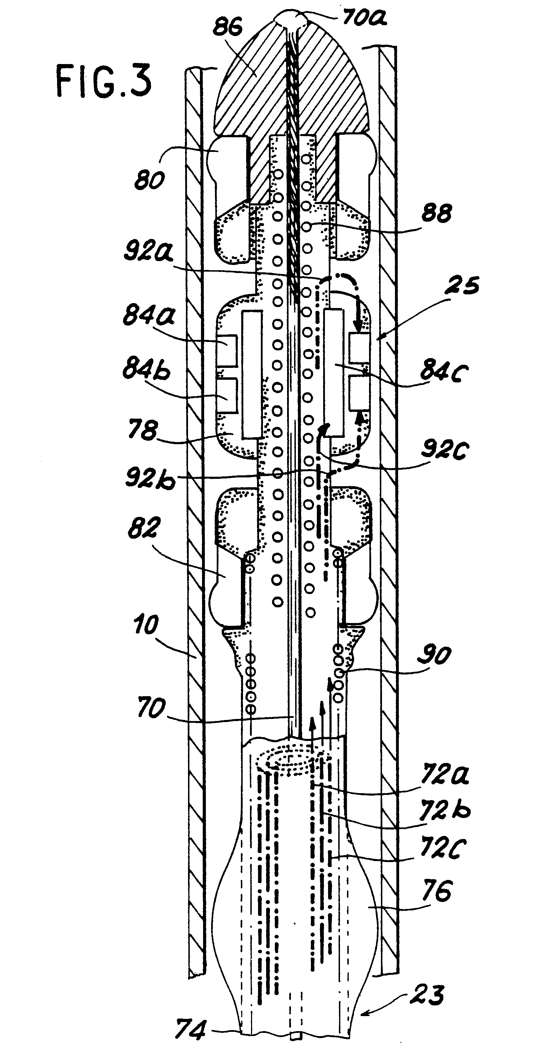

Comme l'illustre plus précisément la figure 2, la sonde 22 comporte une tête de contrôle 24 qui sera décrite ultérieurement en se référant à la figure 3 et un câble 23 dont la longueur est au moins égale à la longueur du tube à contrôler. Au repos, ce câble est enroulé sur la bobine 24a de l'enrouleur 24, cette bobine étant montée sur l'arbre d'un moteur couple 48 (figure 1) d'un type connu, lors de la mise en oeuvre du dispositif de contrôle 14. Grâce aux caractéristiques propres au moteur couple, une tension constante est appliquée au câble 23 de la sonde entre la bobine 24a et les moyens de régulation de vitesse d'introduction 26, quelle que soit la vitesse de déplacement donnée par ailleurs à la sonde, et même lorsque celle-ci reste immobile.

On voit aussi sur la figure 2 que les moyens 26 de régulation de la vitesse d'introduction de la sonde comportent une poulie 50, d'axe parallèle à l'axe de la bobine 24a, et de moyens 52 pour appliquer le câble 23 sur la gorge de la poulie, afin d'assurer l'entraînement du câble par la poulie en dépit des variations de section du câble qui seront décrites ultérieurement.

L'arbre de la poulie 50 est solidarisé en rotation d'un moteur électrique à courant continu (non représenté) à vitesse de rotation régulée électroniquement. Bien que ce moteur tourne dans le sens correspondant à l'introduction de la sonde dans le tube, il se comporte comme un dispositif de freinage agissant à l'encontre de l'air comprimé servant à introduire la sonde, pour réguler la vitesse d'introduction de celle-ci dans le tube. Un moteur à vitesse sensiblement constante permettrait également de maîtriser le déplacement de la sonde dans le tube à contrôler sous l'action de l'air comprimé. Le moteur peut être régulé automatiquement soit par une dynamo tachymétrique, soit à l'aide d'un codeur d'impulsions.

La poulie 50 comporte à sa périphérie une gorge 50a en forme de V, dans laquelle le câble 23 est maintenu en appui par les moyens 52.

Ces moyens 52 comprennent une courroie 54 ou tout dispositif équivalent apte à appliquer le câble 23 dans la gorge de la poulie et à se déformer pour épouser la forme du câble. La courroie sans fin 54 est reçue sur des galets tels que 56, 58 et 60. De façon plus précise, les galets 56 et 58 sont disposés de telle sorte que la partie de la courroie 54 située entre eux s'incurve pour épouser la forme du câble 23 et appliquer celui-ci dans la partie de la gorge 50a de la poulie qui précède une partie 20a du tube de liaison 20 située à l'intérieur de l'enceinte 16.

Le galet 56 le plus proche de la partie 20a du tube 20 assure l'entraînement de la courroie 54 à une vitesse égale à la vitesse de rotation périphérique de la poulie 50, au niveau de la gorge 50a. A cet effet, la poulie 50 est solidaire d'une couronne dentée 50b, le galet 56 est solidaire d'un pignon 56a, et un jeu de pignons 62 assure la démultiplication appropriée et la transmission du mouvement de rotation de la couronne dentée 50b au pignon 56a.

De plus, des moyens de tension de la courroie 54 sont prévus de façon à maintenir tendue en permanence la partie de la courroie servant à appliquer le câble sur la poulie, en dépit des variations de section du câble. Ces moyens de tension sont placés entre le galet 58 et une pièce fixe 64. De façon plus précise, ils sont constitués par un ressort de compression 66 agissant entre la pièce fixe 64 et un épaulement formé sur une pièce mobile 68 supportant l'axe du galet 58 par l'intermédiaire d'une partie en forme d'étrier.

On décrira maintenant plus en détail en se référant aux figures 2 et 3 la sonde 22, qui se compose comme on l'a vu précédemment d'une tête de contrôle 25 et d'un câble 23.

Le câble 23 sert à la fois à assurer la liaison mécanique entre le dispositif 26 de régulation de la vitesse d'introduction de la sonde et la tête de contrôle, et la transmission des signaux électriques entre les bobines à courants de Foucault de la tête de contrôle et les moyens électroniques (non représentés) qui permettent de façon connue d'alimenter ces bobines et de traiter les signaux qu'elles délivrent afin de fournir les informations souhaitées concernant l'état des parois des tubes contrôlés.

A cet effet, le câble 23 comprend, en partant du centre, un câble de traction 70 réalisé en un matériau résistant tel que du Kevlar (marque déposée), trois conducteurs électriques coaxiaux 72a, 72b et 72c et une gaine de protection extérieure 74 en matière plastique isolante, sur laquelle sont réalisées par surmoulage et à intervalle régulier des protubérances en forme d'olives, ou flotteurs 76. Le diamètre externe des flotteurs 76 est calculé de façon à être légèrement inférieur au diamètre interne du tube 10 à contrôler, même dans les zones où ce dernier présente une légère restriction dûe par exemple à la présence d'une soudure. Ces flotteurs assurent le guidage du câble à l'intérieur du tube et permettent une répartition uniforme de la poussée exercée par l'air comprimé lors de l'introduction de la sonde.

La tête de contrôle 25 se compose essentiellement d'une partie centrale 78 dans laquelle sont montées les bobines à courants de Foucault, d'une partie de guidage avant 80 et d'une partie de guidage arrière 82.

De façon plus précise, la partie centrale 78 comprend deux bobines de mesure annulaires 84a et 84b et un enroulement de saturation 84c, ces bobines et cet enroulement étant noyés dans un bloc de résine. Les pièces de centrage (guidage) avant 80 et arrière 82 comprennent essentiellement une bague élastique, réalisée par exemple en caoutchouc. Le diamètre extérieur de ces bagues est déterminé de la même manière que le diamètre extérieur des flotteurs 76, afin d'assurer le guidage de la tête de mesure 25 à l'intérieur du tube 10 à contrôler, tout en permettant le passage de la tête de mesure dans les parties du tube comportant de légères restrictions de diamètre. De plus, la pièce de centrage avant 80 comporte sur la face avant de la bague élastique de guidage une pièce 86 en forme d'ogive déterminant l'extrémité avant de la tête de mesure 25.

Le diamètre extérieur de la partie 78 portant les bobines à courants de Foucault est inférieur au diamètre extérieur des parties souples de guidage 80 et 82 et calculé de telle sorte que la distance séparant les bobines des parois du tube à contrôler permette de réaliser dans de bonnes conditions les mesures souhaitées. Par exemple, pour un tube de 19,7 mm de diamètre, le diamètre des parties 80 et 82 peut être de 20,2 mm, et celui de la partie 78 de 18 mm.

La liaison souple entre les trois parties 78, 80 et 82 de la tête de mesure est réalisée au moyen d'un ressort hélicoïdal 88 dont les extrémités sont fixées aux pièces de centrage 80 et 82 et qui supporte la partie centrale 78.

Afin de permettre le retour de la tête de mesure 25, même en cas de rupture de certaines parties du câble 23, on voit sur la figure 3 que le câble de traction 70 du câble 23 se prolonge à l'intérieur de la tête de mesure 25 jusqu'à l'extrémité avant de la pièce 86 en forme d'ogive, où le câble 70 est fixé par exemple à l'aide d'un noeud 70a collé à l'aide d'un adhésif tel que de l'Araldite (marque déposée) sur le nez de la pièce 86. Les différentes fibres du câble 70 se trouvent ainsi noyées dans l'adhésif, de telle sorte qu'elles ne risquent pas d'endommager les parois internes du tube 10.

En dehors du câble de traction 70, la tête de mesure 25 est raccordée à l'extrémité du câble 23 au moyen d'un ressort hélicoïdal 90 fixé à la fois sur la bague élastique 82 et sur le premier flotteur 76 du câble. A l'intérieur du ressort de liaison 90 sont réalisées les connexions électriques entre les conducteurs coaxiaux 72a, 72b et 72c du câble et les conducteurs 92a, 92b et 92c reliés électriquement aux bobines 84a, 84b et 84c de la tête de mesure. Afin d'éviter une rupture de la sonde au niveau de cette liaison entre la tête de mesure et le câble, le ressort de liaison 90 est de préférence rempli de résines telles que des résines aux silicones, après que le montage et les contrôles nécessaires aient été réalisés.

Afin que l'introduction de la sonde qui vient d'être décrite s'effectue de façon correcte, c'est-à-dire que la tension du câble entre la tête de mesure 25 et la poulie 50 soit correcte même au début de l'introduction de la sonde, il est également proposé, comme l'illustre notamment la figure 2, de modifier le pas des flotteurs 76 entre la partie du câble la plus proche de la tête de mesure et le reste du câble. A titre d'exemple, pour un câble de 100 m, les flotteurs 76 peuvent être séparés d'un pas $p_1$ de 65 mm sur les dix premiers mètres, puis d'un pas $p_2$ de 130 mm sur tout le reste du câble.

Bien entendu, l'introduction et le retour de la sonde, ainsi que les mesures qui leur correspondent, peuvent être effectués de façon automatique à l'aide de circuits électroniques adaptés ne faisant pas partie de l'invention. Dans cet esprit, on prévoira de préférence un codeur millimétrique pouvant être associé notamment au moteur électrique commandant la rotation de la poulie 50, et un dispositif détecteur de flotteurs 94 pouvant notamment être placé à l'intérieur de l'enveloppe étanche 16, sur la partie 20a du tube de raccordement 20.

Le fonctionnement du dispositif selon l'invention est alors le suivant.

Si l'on se réfère à nouveau à la figure 1, la vanne 42 ainsi que la soupape de décharge 36 sont fermées et la vanne 34 ainsi que la soupape de décharge 44 sont ouvertes. Le compresseur 30 est alors mis sous pression jusqu'à atteindre une pression d'environ $10^5$ Pa détectée par le manomètre 38 à l'entrée du tube 10 à contrôler. Le moteur associé à la poulie 50 est alors mis en oeuvre, ainsi que le moteur couple 48, de telle sorte que la sonde 22 est introduite progressivement dans le tube à contrôler avec une vitesse de défilement constante et imposée de 0,4 m/s.

Il est à noter qu'en l'absence du dispositif de régulation de vitesse 26, l'introduction de la sonde dans le tube serait trop rapide et se ferait à une vitesse trop fluctuante pour permettre de réaliser le contrôle souhaité.

Simultanément, la pression d'introduction est stabilisée à une valeur comprise entre 4 et 4,5 $10^5$ Pa.

Lorsque la sonde est introduite sur la longueur de tube souhaitée, longueur qui peut être déterminée à l'avance au moyen d'un afficheur numérique, le compresseur 30 est stoppé, les moteurs électriques sont arrêtés et le dispositif est dégonflé par ouverture de la soupape de décharge 36. En principe, la sonde est introduite sur une longueur correspondant à la longueur du tube à contrôler diminuée d'une certaine longueur pouvant être environ d'un mètre, afin d'éviter de détériorer les diaphragmes qui se trouvent généralement à la sortie des tubes.

Lorsque la pression à l'entrée du tube 10 est descendue à une valeur proche de zéro, la vanne 42 est ouverte, la vanne 34 et la soupape 44 fermées et le compresseur 30 est remis en marche, de façon à envoyer dans le tube 10 la contre pression totale pendant 4 à 5 secondes. Les moteurs électriques sont alors remis en route pour assurer le retour régulier de la sonde. Après une dizaine de secondes, la contre-pression est réduite à une valeur proche de $2 \cdot 10^5$ Pa. Enfin, lorsque le détecteur de flotteurs signale le passage de la tête de sonde, le dispositif est totalement arrêté et le système de comptage de la longueur de la sonde est remis à zéro.

Compté tenu de la régularité du défilement de la sonde permise par l'invention, aussi bien pendant son introduction que lors de son extraction, les mesures peuvent être réalisées soit pendant l'introduction de la sonde, soit pendant son extraction, soit à la fois pendant ces deux opérations. Ces mesures sont réalisées à l'aide des systèmes de mesure classiques qui ne font pas parti de la présente invention et ne seront donc pas décrits ici en détail.

Bien entendu, des sécurités peuvent être prévues pour éviter la détérioration du câble de la sonde et stopper le défilement, notamment lorsque les conditions de pression et/ou la vitesse de défilement ne sont pas respectées, et en cas de foisonnement du câble. Cette dernière condition peut être détectée au moyen du détecteur de flotteurs et du codeur millimétrique. Elle indique que la sonde est sortie de la gorge de la roue motrice.

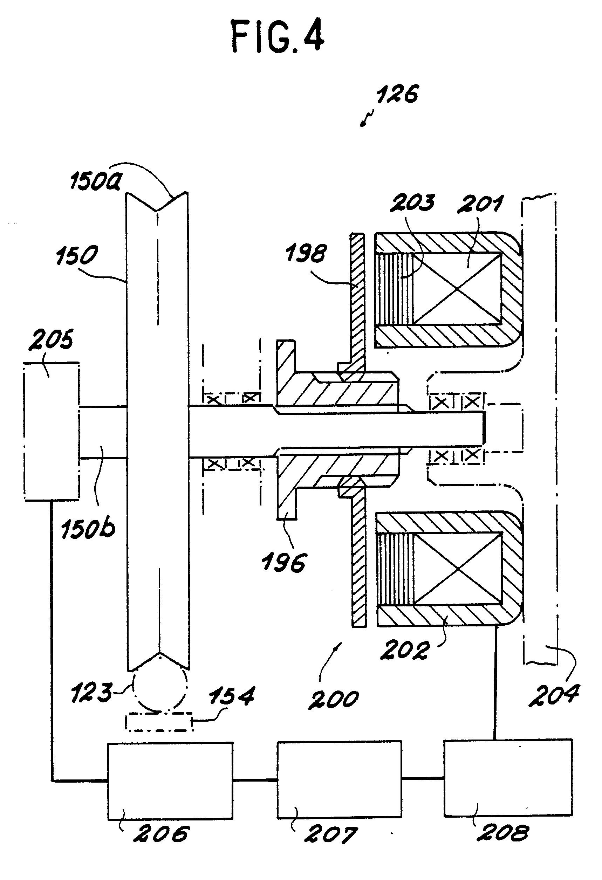

Comme l'illustre en particulier la figure 4, le dispositif qui vient d'être décrit en se référant aux figures 1 à 3 peut subir différentes variantes sans sortir du cadre de l'invention.

Ainsi, on a représenté sur la figure 4 une variante des moyens de régulation de la vitesse d'introduction de la sonde dans un tube à contrôler. Ces moyens de régulation sont désignés de façon générale par la référence 126. Ils comprennent, comme précédemment, une poulie 150 munie d'une gorge 150a dans laquelle passe le câble 123. Un dispositif à courroie 154, semblable au dispositif 52 de la figure 2, permet d'appliquer le câble dans la gorge quelle que soit la section du câble, grâce à la déformation de la courroie 154.

Dans ce mode de réalisation, l'arbre 150b de la poulie 150 porte un moyeu cannelé 196 sur lequel est montée l'armature 198 d'un frein électromagnétique désigné de façon générale par la référence 200. Ce frein 200 comporte de plus, et de façon connue en soi, une bobine 201 logée dans un circuit magnétique 202 ouvert du côté de l'armature 198 et présentant en vis-à-vis de cette dernière une garniture de friction 203. La bobine 201, le circuit 202 et la garniture 203 sont montés sur un support fixe 204, coaxialement à l'arbre de la poulie.

La régulation de la vitesse de défilement du câble est obtenue grâce à un codeur millimétrique 205 placé à l'autre extrémité de l'arbre 150b et dont les signaux sont transmis à un circuit de mesure de vitesse 206. La vitesse de défilement ainsi mesurée est comparée dans un circuit 207 à une vitesse de consigne. Le circuit 207 délivre un signal d'erreur qui est injecté dans un circuit 208 commandant le couple de freinage du frein 200.

Enfin, d'autres systèmes de freinage pourraient être utilisés à la place du moteur ou du frein électromagnétique tels qu'un frein à courants de Foucault ou un frein hydraulique.

**Revendications**

1. Dispositif de contrôle de tubes cintrés et plus particulièrement hélicoïdaux à sonde propulsée pneumatiquement, comprenant une enceinte étanche (16) apte à être mise en communication avec un tube à contrôler (10), des moyens (18) pour introduire un fluide sous pression à l'intérieur de l'enceinte et pour évacuer ce fluide hors de l'enceinte, une sonde (22) comportant un câble (23) muni de flotteurs (76) et une tête de contrôle (25) fixée à l'extrémité du câble, et des moyens (24) d'enroulement du câble, caractérisé en ce qu'il comprend de plus des moyens (26, 126) de régulation de la vitesse d'introduction de la sonde, disposés à l'intérieur de l'enceinte étanche (16) et comprenant un dispositif de freinage à vitesse constante et régulée solidarisé en rotation de l'arbre d'une poulie (50, 150) munie d'une gorge (50a, 150a) dans laquelle passe le câble (23, 123), et des moyens (52) pour appliquer le câble sur la poulie quelle que soit la section du câble, ces derniers moyens comprenant une courroie (54, 154) tendue en permanence par des moyens élastiques (66) et apte à se déformer selon la section du câble.

2. Dispositif selon la revendication 1, caractérisé en ce que le dispositif de freinage comprend un moteur à vitesse régulée électroniquement.

3. Dispositif selon la revendication 2, caractérisé en ce que le dispositif de freinage comprend un frein électromagnétique dont le couple de freinage est régulé électroniquement.

4. Dispositif selon l'une quelconque des revendications 1 à 3, caractérisé en ce que des moyens (50b, 62, 56a) sont prévus pour transmettre à la courroie (54, 154) la rotation de la poulie (50, 150) de façon à faire avancer la courroie à la même vitesse que la gorge de la poulie.

5. Dispositif selon l'une quelconque des revendications 1 à 4, caractérisé en ce que les moyens (24) d'enroulement du câble comprennent une bobine (24a) montée sur l'arbre d'un moteur couple (48).

6. Dispositif selon l'une quelconque des revendications 1 à 5, caractérisé en ce que les flotteurs (76) sont espacés les uns des autres selon au moins deux pas ($p_1$, $p_2$) différents le long du câble (23), le pas ($p_1$) séparant les flotteurs les plus proches de la tête de contrôle (25) étant inférieur à celui ($p_2$) qui sépare les autres flotteurs.

7. Dispositif selon la revendication 6, caractérisé en ce que le pas ($p_1$) séparant les flotteurs les plus proches de la tête de contrôle (25) est sensiblement égal à la moitié du pas ($p_2$) séparant les autres flotteurs.

8. Dispositif selon l'une quelconque des revendications précédentes, caractérisé en ce que la sonde (22) comporte sur toute sa longueur un câble central de traction (70) qui traverse la tête de contrôle (25) et est fixé à l'extrémité avant de cette dernière.

9. Dispositif selon la revendication 8, caractérisé en ce que le câble central (70) est fixé à l'extrémité avant de la tête de contrôle (25) au moyen d'un noeud (70a) enrobé d'un matériau de collage.

10. Dispositif selon l'une quelconque des revendications précédentes, caractérisé en ce que la tête de contrôle (25) est reliée au câble (23) par un ressort de liaison (90) dans lequel sont réalisées des connexions électriques entre des conducteurs électriques coaxiaux (72a, 72b, 72c) du câble et des bobinages (84a, 84b, 84c) de la tète de contrôle, ledit ressort étant rempli d'un matériau de remplissage.

11. Dispositif selon l'une quelconque des revendications précédentes, caractérisé en ce que le câble (23) comporte une gaine isolante (74) sur laquelle lesdits flotteurs (76) sont réalisés par surmoulage.

12. Dispositif selon l'une quelconque des revendications précédentes, caractérisé en ce qu'il comprend de plus un dispositif (94) pour détecter le passage des flotteurs (76).

13. Dispositif selon l'une quelconque des revendications précédentes, caractérisé en ce qu'il comprend de plus un codeur millimétrique associé à la poulie (50, 150).

## Claims

1. Device for checking bent, more particularly helical tubes, using a pneumatically propelled probe, comprising a sealing-tight enclosure (16) adapted to communicate with a tube (10) to be checked, means (18) for introducing a pressurized fluid into the enclosure and evacuate the fluid from the enclosure, a probe (22) comprising a cable (23) having floaters (76) and a checking head (25) attached to the end of the cable, and cable-winding means (24), characterized in that the device also comprises means (26, 126) for controlling the introduction speed of the probe which are disposed inside the sealing-tight enclosure (16) and comprise a decelerating device of constant, controlled speed connected for corotation to the shaft of a pulley (50, 150) formed with a groove (50a, 150a) through which the cable (23, 123) extends, means (52) being provided for applying the cable to the pulley, whatever the section of the cable may be, such means comprising a belt (54, 154) permanently tensioned by resilient means (66) and adapted to be deformed in accordance with the section of the cable.

2. Device according to claim 1, characterized in that the decelerating device comprises a motor with electronically controlled speed.

3. Device according to claim 2, characterized in that the deceleration device comprises an electromagnetic brake whose braking torque is controlled electronically.

4. Device according to one of the claims 1 to 3, characterized in that means (50b, 62, 56a) are provided for transmitting the rotation of the pulley (50, 150) to the belt (54, 154), so as to make the belt advance at the same speed as the groove in the pulley.

5. Device according to one of the claims 1 to 4, characterized in that the cable-winding means (24) comprise a coil (24a) mounted on the shaft of a torque motor (48).

6. Device according to one of the claims 1 to 5, characterized in that the floaters (76) are spaced out from one another in at least two different steps ($p_1$, $p_2$) along the cable (23), the step ($p_1$) separating the floaters nearest to the checking head (25) being smaller than that ($p_2$) separating the other floaters.

7. Device according to claim 6, characterized in that the space ($p_1$) separating the floaters closest to the checking head (25) is substantially equal to half the step ($p_2$) separating the other floaters.

8. Device according to any one of the preceding claims, characterized in that the probe (22) comprises over its whole length a central pulling cable (70) which extends through the checking head (25) and is attached to the front end thereof.

9. Device according to claim 8, characterized in that the central cable (70) is attached to the front end of the checking head (25) by means of a knot (70a) coated with a gluing material.

10. Device according to any one of the preceding claims, characterized in that the checking head (25) is connected to the cable (23) via a connecting spring (90) in which electrical connections are made between coaxial electric conductors (72a, 72b, 72c) of the cable and windings (84a, 84b, 84c) of the checking head, such spring being filled with a filling material.

11. Device according to any one of the preceding claims, characterized in that the cable (23) comprises an insulating sheath (74) on to which the floaters (76) are moulded.

12. Device according to any one of the preceding claims, characterized in that the device comprises more than one device (94) for detecting the passage of the floaters (76).

13. Device according to any one of the preceding claims, characterized in that the device also comprises a millimetric coder associated with the pulley (50, 150).

## Patentansprüche

1. Vorrichtung zur Prüfung von bogenförmigen und insbesondere spiralförmigen Röhren mit einer pneumatisch vorwärtsgetriebenen Sonde, wobei die Vorrichtung eine dichte Kammer (16), die mit einer zu prüfenden Röhre (10) verbunden werden kann, Mittel (18) zum Einführen eines Druckfluids in das Innere der Kammer und zum Ausbringen dieses Fluids aus der Kammer, eine Sonde (22), die ein mit Schwimmkörpern (76) ausgerüstetes Kabel (23) und einen an dem Kabelende befestigten Prüfkopf (25) umfaßt, und Wickelmittel (24) für das Kabel aufweist, dadurch gekennzeichnet, daß sie zusätzlich Steuermittel (26, 126) für die Einführgeschwindigkeit der Sonde, die im Inneren der dichten Kammer (16) angeordnet sind und für eine konstante und gesteuerte Geschwindigkeit eine Bremsvorrichtung aufweisen, die mit der Welle einer Scheibe (50, 150) drehfest verbunden ist, welche mit einer Nut (50a, 150a), in der das Kabel (23, 123) läuft, versehen ist, und Mittel (52) umfaßt, um das Kabel unabhängig von dem Querschnitt des Kabels gegen die Scheibe zu drücken, wobei diese letzteren Mittel einen Riemen (54, 154) aufweisen, der durch elastische Mittel (66) fortwährend gespannt ist und sich entsprechend dem Kabelquerschnitt verformen kann.

2. Vorrichtung nach Anspruch 1, dadurch gekennzeichnet, daß die Bremsvorrichtung einen Motor mit elektronisch geregelter Geschwindigkeit umfaßt.

3. Vorrichtung nach Anspruch 2, dadurch gekennzeichnet, daß die Bremsvorrichtung eine elektromagnetische Bremse umfaßt, deren Bremsmoment elektronisch geregelt ist.

4. Vorrichtung nach irgendeinem der Ansprüche 1 bis 3, dadurch gekennzeichnet, daß Mittel (50b, 62, 56a) vorgesehen sind, um auf den Riemen (54, 154) die Drehung der Scheibe (50,

150) derart zu übertragen, daß der Riemen mit derselben Geschwindigkeit wie die Nut der Scheibe vorwärtsbewegt wird.

5. Vorrichtung nach irgendeinem der Ansprüche 1 bis 4, dadurch gekennzeichnet, daß die Wickelmittel (24) des Kabels eine auf der Welle eines Drehmomentmotors (48) angebrachte Spule (24a) umfassen.

6. Vorrichtung nach irgendeinem der Ansprüche 1 bis 5, dadurch gekennzeichnet, daß die Schwimmkörper (76) mit wenigstens zwei unterschiedlichen Abständen ($p_1$, $p_2$) längs des Kabels (23) voneinander beabstandet sind, wobei der Abstand ($p_1$), der die sich dem Prüfkopf (25) am nahesten befindenden Schwimmkörper trennt, kleiner als derjenige ($p_2$) ist, der die anderen Schwimmkörper trennt.

7. Vorrichtung nach Anspruch 6, dadurch gekennzeichnet, daß der Abstand ($p_1$), der die sich dem Prüfkopf (25) am nahesten befindenden Schwimmkörper trennt, im wesentlichen gleich dem halben Abstand ($p_2$) ist, der die anderen Schwimmkörper trennt.

8. Vorrichtung nach irgendeinem der vorhergehenden Ansprüche, dadurch gekennzeichnet, daß die Sonde (22) über ihre gesamte Länge ein mittleres Zugkabel (70) aufweist, welches den Prüfkopf (25) durchquert und am vorderen Ende dieses Letzteren befestigt ist.

9. Vorrichtung nach Anspruch 8, dadurch gekennzeichnet, daß das mittlere Kabel (70) am vorderen Ende des Prüfkopfes (25) mittels eines von einem Klebemittel umgebenen Knotens (70a) befestigt ist.

10. Vorrichtung nach irgendeinem der vorhergehenden Ansprüche, dadurch gekennzeichnet, daß der Prüfkopf (25) mit dem Kabel (23) über eine Verbindungsfeder (90) verbunden ist, in der die elektrischen Verbindungen zwischen den elektrischen Koaxialleitern (72a, 72b, 72c) des Kabels und Wicklungen (84a, 84b, 84c) des Prüfkopfes hergestellt sind, wobei die genannte Feder mit einem Füllmaterial gefüllt ist.

11. Vorrichtung nach irgendeinem der vorhergehenden Ansprüche, dadurch gekennzeichnet, daß das Kabel (23) eine Isolierumhüllung (74) aufweist, auf der die genannten Schwimmkörper (76) durch Aufformen hergestellt sind.

12. Vorrichtung nach irgendeinem der vorhergehenden Ansprüche, dadurch gekennzeichnet, daß sie ferner eine Vorrichtumg (94) umfaßt, um den Durchgang der Schwimmkörper (76) zu erfassen.

13. Vorrichtung nach irgendeinem der vorhergehenden Ansprüche, dadurch gekennzeichnet, daß sie ferner einen der Scheibe (50, 150) zugeordneten millimetrischen Kodierer aufweist.

# FIG.1

FIG. 2

0114139

FIG.3

0 114 139

# FIG.4